(19) **Europäisches Patentamt European Patent Office Office européen des brevets**

(11) **EP 3 548 323 B1**

(12) **FASCICULE DE BREVET EUROPEEN**

(45) Date de publication et mention
de la délivrance du brevet:
**14.01.2026 Bulletin 2026/03**

(21) Numéro de dépôt: **17783930.5**

(22) Date de dépôt: **21.09.2017**

(51) Classification Internationale des Brevets (IPC):
**B60K 6/48** *(2007.10)* **B60W 20/00** *(2016.01)*
**B60W 20/15** *(2016.01)* **B60W 30/18** *(2012.01)*
**B60W 10/184** *(2012.01)* **B60W 10/08** *(2006.01)*
**B60W 10/11** *(2012.01)* **B60W 30/19** *(2012.01)*

(52) Classification Coopérative des Brevets (CPC):
**B60K 6/48; B60W 10/08; B60W 10/11;**
**B60W 10/184; B60W 20/00; B60W 20/15;**
**B60W 30/18127; B60W 30/19;** B60K 2006/4841;
B60W 2710/1005; B60W 2710/18; B60Y 2300/89;
Y02T 10/62; Y02T 10/72

(86) Numéro de dépôt international:
**PCT/FR2017/052531**

(87) Numéro de publication internationale:
**WO 2018/100258 (07.06.2018 Gazette 2018/23)**

(54) **PROCEDE DE COMPENSATION DE RUPTURE DE COUPLE A LA ROUE EN CAS DE SITUATION DE CHANGEMENT DE RAPPORT EN FREINAGE**

VERFAHREN ZUM KOMPENSIEREN DER ZUGKRAFTUNTERBRECHUNG WÄHREND EINES SCHALTVORGANGS IM SCHIEBEBETRIEB

METHOD OF COMPENSATION OF TORQUE INTERRUPTION DURING GEARSHIFT WHILE BRAKING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2016 FR 1661867**

(43) Date de publication de la demande:
**09.10.2019 Bulletin 2019/41**

(73) Titulaires:
• **Renault s.a.s**
  **92100 Boulogne Billancourt (FR)**
• **Nissan Motor Co., Ltd.**
  **Yokohama-shi, Kanagawa 221-0023 (JP)**

(72) Inventeurs:
• **CHANTREL, Cédric**
  **94220 Charenton Le Pont (FR)**
• **MARSILIA, Marco**
  **94230 Cachan (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**WO-A1-2009/080901    WO-A1-2012/156043**
**US-A- 6 126 251**

**Description**

La présente invention se rapporte à la commande du couple d'une machine électrique de traction en phase de changement de rapport en freinage, dans une architecture électrique ou hybride ne permettant pas d'assurer, pendant des changements changement de rapport en mode électrique pur, le couplage à la roue d'une source électrique de couple régénérative.

Plus précisément, elle a pour objet un procédé de compensation de rupture de couple à la roue en cas de changement de rapport en freinage, sur un véhicule disposant d'une machine électrique de traction reliée aux roues du véhicule par une boîte de vitesses pouvant transmettre aux roues le couple de freinage de la machine électrique en phase de décélération sur au moins deux rapports de transmission, et d'un système de freinage mécanique agissant sur les roues indépendamment de la machine électrique.

Par la publication FR 2 973 299, on connaît une architecture hybride disposant de deux rapports électriques purs, entre lesquels les changements d'effectuent en déplaçant un baladeur. Après être dé-craboté, le baladeur passe par une position neutre intermédiaire, où aucun couple de la machine électrique de traction n'est transmis à la roue, avant d'être craboté du côté opposé.

Ce type de transmission implique que pendant une phase de freinage assurée par un moteur électrique, on observe sur un changement de rapport électrique en mode ZEV (pour *Zéro Emission Vehicle*), une rupture de couple à la roue. Le couple de freinage du moteur électrique n'est alors plus transmis aux roues. De plus, afin de permettre le dé-crabotage dans la phase initiale du changement de rapport, il est nécessaire d'annuler le couple fourni par le moteur électrique dans le but de réduire le couple exercé au niveau du crabot. Cette annulation de couple impacte directement le couple de freinage à la roue, ce qui est très mal perçu par l'utilisateur. Les documents WO 2009/080901 A1 et US 6 126 251 A divulguent des procédés de changement de rapport en phase de freinage. Selon ces documents, au moins une partie du couple régénératif d'une machine électrique, estompé durant les phases d'ouverture de la chaîne cinématique, est compensée par le contrôle du freinage hydraulique.

La présente invention vise à compenser le manque de couple de freinage à la roue, à la fois pendant la phase d'annulation de couple lors de la préparation au décrabotage, mais aussi pendant le changement de rapport à l'aide du système de freinage du véhicule.

Dans ce but, elle propose un procédé de compensation de rupture de couple selon la revendication 1, et donc de définir une consigne de couple de freinage mécanique aux roues, qui est fonction du type de pilotage de la machine électrique, et de la date de demande d'un changement de rapport descendant à la boîte.

Cette invention trouve une application privilégiée, mais non limitative, sur tout véhicule dont la boîte de vitesses ne permet pas d'assurer le couplage à la roue d'une source électrique de couple régénérative, pendant les changements de rapports en mode électrique.

La présente invention sera mieux comprise à la lecture de la description suivante d'un mode de réalisation non limitatif de celle-ci, en se reportant aux dessins annexés, sur lesquels :

- la figure 1 est un schéma simplifié de boîte de vitesses concernée, et
- la figure 2, illustre l'application de l'invention.

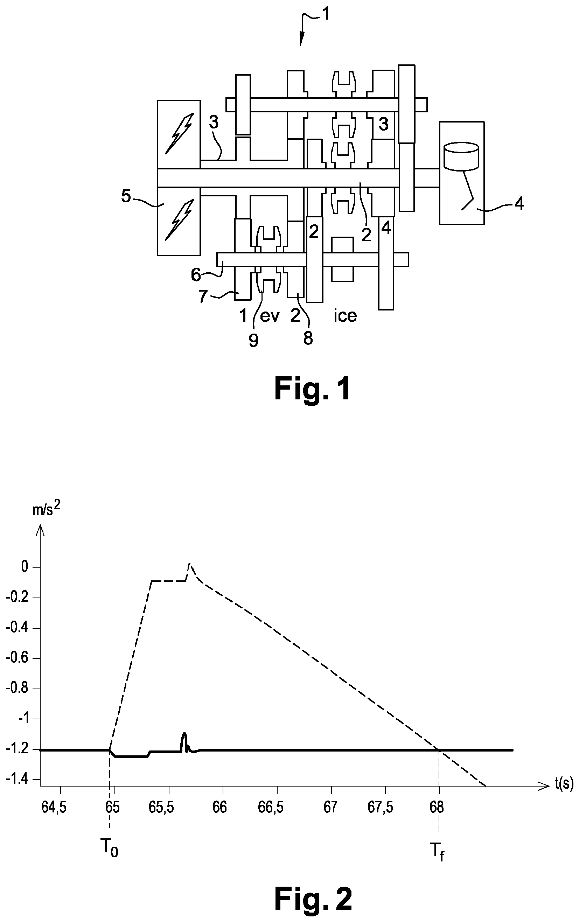

Sur la figure 1, on a représenté de façon sommaire l'architecture d'une transmission 1 hybride à quatre rapports comportant deux arbres primaires concentriques 2, 3, reliés respectivement à un moteur thermique 4 et à une machine électrique de traction 5. L'arbre secondaire 6 porte deux pignons fous 7, 8, permettant d'établir deux premiers rapports électriques selon la position du baladeur 9, lorsque le moteur thermique n'est pas connecté à la transmission.

Pendant des changements de rapport en mode électrique « pur » entre les rapports 1 et 2, la transmission du couple aux roues est interrompue. C'est le cas en phase de traction, mais également en phase de freinage « récupératif », où la machine électrique transmet un couple de freinage à la roue. Lors d'un changement entre ces deux rapports en phase mode de freinage « récupératif », il y a rupture du couple de freinage, lorsque le baladeur 8 passe par sa position neutre intermédiaire. Le dé-crabotage n'est pas effectif à l'instant même de la demande de changement de rapport, mais sa préparation commence instantanément.

Si l'on considère un système de pilotage de la machine électrique pendant ces phases de transition, ses principales entrées sont les suivantes :

- *ME_Tq_sp* : consigne de couple de la machine électrique principale en Nm,

- *ME_Tq_esti* : estimation du couple produit par la machine électrique principale en Nm,

- *DLS_tgt* : rapport de boîte demandé ; à l'instant d'une demande de changement de rapport montant (ou descendant) *T0,* le signal de rapport de boîte demandé *DLS_tgt* passe par exemple, de la valeur 2 à la valeur 1, ou de 1 à 2. L'instant où le changement de rapport est terminé est *Tf,*

- *SCM_Ctrl_typ* : type de pilotage de la boîte de vitesse : par exemple pas de pilotage, pilotage en couple, ou pilotage en vitesse.

Pour compenser la défaillance du couple de freinage de la machine électrique 5, l'invention vise à imposer au système de freinage principal du véhicule une consigne de couple de freinage mécanique, notée *BRK_Tq_sp.* Cette consigne s'exprime en Nm. Sa valeur, imposée au système de freinage principal, par la méthode proposée, en est la donnée de sortie.

La consigne de couple de la machine électrique 5 (dite principale dans l'hypothèse où la transmission peut recevoir en plus l'apport énergétique de machines électriques secondaires) se note *ME_Tq_sp(t).* La consigne de couple ramenée à la roue, *ME_Tq_sp_whl,* est liée à la consigne de couple de la machine électrique *ME_Tq_sp(t)* par le rapport de transmission

*ME_ratio_whl (t)* entre la machine et la roue, selon la relation :

$$ME\_Tq\_sp\_whl(t) = ME\_Tq\_sp(t) * ME\_ratio\_whl (t).$$

L'estimation du couple produit par la machine électrique principale ramenée à la roue *ME_Tq_esti_whl* peut se définir de manière analogue à partir de l'estimation du couple produit par la machine électrique, comme le produit d'une estimation du couple produit par la machine électrique *ME_Tq_esti(t)* par le même rapport de réduction jusqu'aux roues *ME_ratio_whl* :

$$ME\_Tq\_esti\_whl(t) = ME\_Tq\_esti(t) * ME\_ratio\_whl (t).$$

Pour tenir compte d'un retard 0 < *t_delay* <= 1s entre l'envoi d'une consigne de couple de la machine électrique principale ramenée à la roue et son application effective, on définit une consigne de couple ramené à la roue retardée, *ME_Tq_sp_whl_delay,* telle que *ME_Tq_sp_whl_delay(t) = ME_Tq_sp_whl(t - t_delay)* avec 0 < *t_delay* <= 1seconde. Puis, on définit un coefficient de retard $\alpha$, tel que :

$$\alpha(t) =(ME\_Tq\_sp\_whl(t) - ME\_Tq\_sp\_whl\_delay(t)) / t\_delay$$

Grâce au coefficient $\alpha$, on peut définir une consigne de couple de la machine électrique principale ramenée à la roue anticipée *ME_Tq_sp_whl_ant* tel que :

$$ME\_Tq\_sp\_whl\_ant(t) = Int(\alpha(T0)),$$

où *Int* est une intégrale discrète initialisée à l'instant *T0,* avec comme condition initiale *ME_Tq_sp_whl(T0).* La consigne de couple de la machine électrique ramenée à la roue anticipée (*ME_Tq_sp_whl_ant),* est ainsi définie à partir de la consigne de couple ramenée à la roue (*ME_Tq_sp_whl*) sur la base du coefficient de retard $\alpha$ représentatif de l'écart entre l'envoi d'une consigne de couple de la machine électrique ramenée à la roue et son application effective.

Conformément à l'invention, on définit d'abord une consigne de couple de freinage mécanique aux roues à l'instant t : *BRK_Tq_sp_raw(t).* Cette consigne est une consigne de couple de freinage mécanique brute non saturée, fonction du type de pilotage de la machine électrique *SCM_Ctrl_typ* et de la date de fin de changement de rapport montant ou descendant *$T_f$* à la boîte. Selon le type de pilotage, *BRK_Tq_sp_raw(t)* se définit de la façon suivante.

S'il n'y a pas de pilotage [*SCM_Ctrl_ typ*(t) = *pas de pilotage*], alors la consigne de freinage mécanique non saturée est nulle : *BRK_Tq_sp_raw(t)* = 0

Si la machine électrique est pilotée en couple [*SCM_Ctrl_typ(t) = pilotage en couple],* et tant que la date *t* est antérieure à la fin de passage montant ou descendant [*t < Tf*], la consigne de couple de freinage mécanique non saturée *BRK_Tq_sp_raw(t)* est égale à la différence entre la date de demande de couple à la machine électrique anticipée et l'estimation du couple à la roue à t : *BRK_Tq_sp_raw(t) = ME_Tq_sp_whl_ant(t) - ME_Tq_esti_whl (t)* .

Si la machine électrique est pilotée en couple [*SCM_Ctrl_typ(t) = pilotage en couple*], et dès que la date t est postérieure ou égale à la fin de passage montant ou descendant [*t >= Tf*], la consigne est nulle (*BRK_Tq_sp_raw(t)* = 0).

Si la machine électrique est pilotée en vitesse [*SCM_Ctrl_typ(t) = pilotage en vitesse*], et tant que la date t antérieure à la date de fin de passage montant ou descendant [*t < Tf*], la consigne de freinage mécanique non saturée est égale à la consigne de couple anticipée ramenée à la roue :

$$BRK\_Tq\_sp\_raw(t) = ME\_Tq\_sp\_whl\_ant(t)$$

Si la machine électrique est pilotée en vitesse [*SCM_Ctrl_typ(t)* = *pilotage en vitesse*] dès que la date t est postérieure ou égale à la fin de passage montant ou descendant [t >= Tf], la consigne de freinage mécanique non saturée est nulle : *BRK_Tq_sp_raw(t)* = 0.

En d'autres termes, la consigne de freinage mécanique *BRK_Tq_sp_raw(t)* est nulle lorsque la machine électrique n'est pas pilotée, avant la demande de passage montant ou descendant T0 et après la fin de passage de rapport montant ou descendant $T_f$. Avant la fin de passage montant ou descendant, elle est égale :

- à la différence entre la demande de couple à la machine électrique anticipée et l'estimation du couple anticipé à la roue *BRK_Tq_sp_raw(t)* = *ME_Tq_sp_whl_ant(t) ME_Tq_esti_whl(t),* si la machine électrique est pilotée en couple, et

- à la consigne de couple anticipée ramenée à la roue *ME_Tq_sp_whl_ant(t),* si la machine électrique est pilotée en vitesse.

On passe de la consigne de couple de freinage mécanique non saturée *BRK_Tq_sp_raw(t)* à la consigne de couple de freinage mécanique *BRK_Tq_sp(t),* par les relations suivantes :

- si

$$BRK\_Tq\_sp\_raw(t) \; > \; 0, \; BRK\_Tq\_sp(t) \; = \; 0$$

- si

$$BRK\_Tq\_sp\_raw(t) <= 0, \; BRK\_Tq\_sp(t) \; = \; BRK\_Tq\_sp\_raw(t).$$

Si l'estimation du couple de la machine électrique *ME_Tq_esti* n'est pas disponible à l'instant t, l'invention prévoit de se baser sur la consigne de couple ramené à la roue retardée, *ME_Tq_sp_whl_delay* pour calculer l'estimation du couple à la roue *ME_Tq_esti_whl.* Elle devient :

$$ME\_Tq\_esti\_whl(t) \; = \; ME\_Tq\_sp\_whl\_delay(t),$$

avec un retard limité par exemple à 0,05 seconde :

$$0 \; < \; t\_delay \; <= \; 0,05s.$$

La figure 2 montre en simulation, l'avantage de la solution proposée, qui compense le manque de décélération du véhicule pendant un changement de rapport. Dans cet exemple, l'accélération du véhicule avant le changement de rapport est de - 1,2 m/$^s$. Sans l'invention (courbe en traits interrompus), le couple de freinage de la machine électrique diminue sans compensation à partir de la demande de changement de rapport montant ou descendant à *T0.* L'accélération du véhicule quitte simultanément sa valeur initiale pour remonter jusqu'à zéro, avant de redescendre sur une pente plus douce jusqu'à celle-ci. Avec l'invention (courbe en trait plein), l'accélération véhicule se maintient à sa valeur de -1,2m/s$^2$, pendant le changement de rapport.

**Revendications**

1. Procédé de compensation de rupture de couple à la roue en cas de changement de rapport en freinage sur un véhicule disposant d'une machine électrique de traction (5) reliée aux roues du véhicule par une boîte de vitesses (1) pouvant transmettre aux roues le couple de freinage de la machine électrique (5) en phase de décélération sur au moins deux rapports de transmission, et d'un système de freinage mécanique agissant sur les roues indépendamment de la machine électrique, **caractérisé en ce qu'**on définit une consigne de couple de freinage mécanique aux roues à l'instant (t) (BRK_Tq_sp_raw(t)) fonction du type de pilotage (SCM_Ctrl_typ(t)) de la machine électrique et de l'instant de fin de changement de rapport descendant (Tf), et que, si la machine électrique est pilotée en couple, cette consigne est égale à la différence, avant l'instant de fin de changement de rapport descendant (Tf), entre une demande de couple à la machine électrique anticipée (ME_Tq_sp_whl_ant(t)) et l'estimation du couple à la roue (ME_Tq_esti_whl(t)), et **en ce que** la consigne de freinage mécanique à l'instant (t) BRK_Tq_sp_raw(t) est égale à une consigne de couple anticipée ramenée la roue (ME_Tq_sp_whl_ant(t)), avant l'instant de fin de passage descendant à la boîte(Tf), si la machine électrique est pilotée en vitesse.

2. Procédé de compensation de rupture de couple selon la revendication 1, **caractérisé en ce que** la consigne de freinage mécanique (BRK_Tq_sp_raw(t)) est nulle lorsque la machine électrique n'est pas pilotée.

3. Procédé de compensation de rupture de couple selon la revendication 1 ou 2, **caractérisé en ce que** la consigne de couple de freinage mécanique (BRK_Tq_sp_raw(t)) est nulle après l'instantde fin de changement de rapport descendant.

4. Procédé de compensation de rupture de couple, selon l'une des revendications précédentes, **caractérisé en ce que** l'estimation du couple de la machine électrique ramenée à la roue (ME Tq esti whl(t)) est le produit d'une estimation du couple produit par la machine électrique (ME Tq esti(t)) par le rapport de réduction jusqu'aux roues (ME ratio whl).

5. Procédé de compensation de rupture de couple selon la revendication précédente, **caractérisé en ce que** si une estimation du couple de la machine électrique (ME Tq esti) n'est pas disponible à l'instant (t), l'estimation du couple à la roue (ME Tq esti whl) se base sur une consigne de couple ramené à la roue retardée (ME Tq sp whl delay(t)).

6. Procédé de compensation de rupture de couple selon la revendication précédente, **caractérisé en ce que** le retard (t_delay) est inférieur à 0,05s.

7. Procédé de compensation de rupture de couple selon l'une des revendications précédentes, **caractérisé en ce que** la consigne de couple de freinage mécanique (BRK Tq sp raw(t)) est une consigne brute non saturée.

8. Procédé de compensation de rupture de couple selon l'une des revendications précédentes, caractérisé en ce la consigne de couple (BRK Tq sp(t)) est liée à la consigne de couple de freinage mécanique non saturée BRK Tq sp raw(t) par les relations suivantes :

   - si

$$(BRK\_Tq\_sp\_raw(t)) > 0, (BRK\_Tq\_sp(t)) = 0,$$

   et
   - si

$$(BRK\_Tq\_sp\_raw(t)) <= 0, BRK\_Tq\_sp(t) = BRK\_Tq\_sp\_raw(t).$$

**Patentansprüche**

1. Verfahren zum Ausgleich des Drehmomentausfalls an den Rädern bei einem Gangwechsel während des Bremsvorgangs bei einem Fahrzeug, das über einen elektrischen Antriebsmotor (5) verfügt, der über ein Getriebe (1) mit den Rädern des Fahrzeugs verbunden ist, das das Bremsmoment des elektrischen Motors (5) während der Verzögerungsphase über mindestens zwei Übersetzungsverhältnisse auf die Räder übertragen kann, und einem mechanischen Bremssystem, das unabhängig von der elektrischen Maschine auf die Räder wirkt, **dadurch gekennzeichnet, dass** ein Sollwert für das mechanische Bremsmoment an den Rädern zum Zeitpunkt (t) (BRK_Tq_sp_raw(t)) in Abhängigkeit von der Art der Steuerung der Elektromaschine und dem Zeitpunkt des Endes des Herunterschaltvorgangs (Tf) definiert wird und dass dieser Sollwert, wenn die Elektromaschine drehmomentgesteuert ist, vor dem Zeitpunkt des Endes des Herunterschaltvorgangs (Tf) gleich der Differenz zwischen einer vorweggenommenen Drehmomentanforderung an den Elektromotor (ME_Tq_sp_whl_ant(t)) und der Schätzung des Drehmoments am Rad (ME_Tq_esti_whl(t)) und dass der Sollwert für die mechanische Bremse zum Zeitpunkt (t) BRK_Tq_sp_raw(t) gleich einem vorweggenommenen Drehmomentsollwert am Rad (ME_Tq_sp_whl_ant(t)) vor dem Zeitpunkt des Endes des Herunterschaltens zum Getriebe (Tf) ist, wenn die elektrische Maschine drehzahlgesteuert ist.

2. Verfahren zum Ausgleichen eines Drehmomentausfalls gemäß Anspruch 1, **dadurch gekennzeichnet, dass** der mechanische Bremssollwert (BRK_Tq_sp_raw(t)) null ist, wenn die elektrische Maschine nicht angesteuert wird.

3. Verfahren zum Ausgleich eines Drehmomentausfalls gemäß Anspruch 1 oder 2, **dadurch gekennzeichnet, dass** der Sollwert für das mechanische Bremsmoment (BRK_Tq_sp_raw(t)) nach dem Zeitpunkt des Endes des Herunterschaltvorgangs null ist.

4. Verfahren zum Ausgleich eines Drehmomentabfalls gemäß einem der vorstehenden Ansprüche, **dadurch gekennzeichnet, dass** die auf das Rad bezogene Schätzung des Drehmoments der elektrischen Maschine (ME_Tq_esti_whl(t)) das Produkt einer Schätzung des von der elektrischen Maschine erzeugten Drehmoments (ME_Tq_esti(t)) und des Untersetzungsverhältnisses bis zu den Rädern (ME_ratio_whl).

5. Verfahren zum Ausgleich eines Drehmomentausfalls gemäß dem vorhergehenden Anspruch, **dadurch gekennzeichnet, dass**, wenn zum Zeitpunkt (t) keine Schätzung des Drehmoments der elektrischen Maschine (ME_Tq_esti) verfügbar ist, die Schätzung des Drehmoments am Rad (ME_Tq_esti_whl) auf einem verzögerten, auf das Rad bezogenen Drehmomentsollwert (ME_Tq_sp_whl_delay(t)) basiert.

6. Verfahren zum Ausgleich von Drehmomentunterbrechungen gemäß dem vorhergehenden Anspruch, **dadurch gekennzeichnet, dass** die Verzögerung (t_delay) weniger als 0,05 s beträgt.

7. Verfahren zum Ausgleich eines Drehmomentausfalls gemäß einem der vorhergehenden Ansprüche, **dadurch gekennzeichnet, dass** der Sollwert für das mechanische Bremsmoment (BRK_Tq_sp_raw(t)) ein ungesättigter Rohsollwert ist.

8. Verfahren zum Ausgleich von Drehmomentunterbrechungen gemäß einem der vorstehenden Ansprüche, **dadurch gekennzeichnet, dass** der Drehmomentsollwert (BRK_Tq_sp(t)) mit dem ungesättigten mechanischen Bremssollwert BRK_Tq_sp_raw(t) durch die folgenden Beziehungen verbunden ist:

- wenn

$$(BRK\_Tq\_sp\_raw(t)) > 0, (BRK\_Tq\_sp(t)) = 0,$$

und
- wenn

$$(BRK\_Tq\_sp\_raw(t)) <=0, BRK\_Tq\_sp(t) = BRK\_Tq\_sp\_raw(t).$$

**Claims**

1. Method for compensating for torque loss at the wheels in the event of a gear change during braking on a vehicle equipped with an electric traction motor (5) connected to the vehicle's wheels by a gearbox (1) capable of transmitting the braking torque of the electric motor (5) to the wheels during deceleration in at least two gear ratios, and a mechanical braking system acting on the wheels independently of the electric motor, **characterised in that** a mechanical braking torque setpoint is defined for the wheels at time (t) (BRK_Tq_sp_raw(t)) as a function of the type of control of the electric motor, and the end time of the downshift (Tf), and that, if the electric motor is controlled by torque, this setpoint is equal to the difference, before the end time of the downshift (Tf), between an anticipated torque demand on the electric machine (ME_Tq_sp_whl_ant(t)) and the estimated torque at the wheel (ME_Tq_esti_whl(t)), and **in that** the mechanical braking setpoint at time (t) BRK_Tq_sp_raw(t) is equal to an anticipated torque setpoint reduced to the wheel (ME_Tq_sp_whl_ant(t)), before the gear shift down end time (Tf), if the electric machine is speed-controlled.

2. Method for compensating for torque breakage according to claim 1, **characterised in that** the mechanical braking setpoint (BRK_Tq_sp_raw(t)) is zero when the electric machine is not being controlled.

3. Method for compensating for torque breakage according to claim 1 or 2, **characterised in that** the mechanical braking torque setpoint (BRK_Tq_sp_raw(t)) is zero after the end of the downshift.

4. Method for compensating for torque interruption, according to one of the preceding claims, **characterised in that** the estimate of the torque of the electric machine reduced to the wheel (ME_Tq_esti_whl(t)) is the product of an estimate of the torque produced by the electric machine (ME_Tq_esti(t)) by the reduction ratio to the wheels (ME_ratio_whl).

5. Method for compensating for torque breakage according to the previous claim, **characterised in that** if an estimate of the torque of the electric machine (ME_Tq_esti) is not available at time (t), the estimation of the torque at the wheel (ME_Tq_esti_whl) is based on a delayed torque setpoint (ME_Tq_sp_whl_delay(t)).

6. Torque break compensation method according to the previous claim, **characterised in that** the delay (t_delay) is less than 0.05s.

7. Method for compensating for torque breakage according to one of the preceding claims, **characterised in that** the mechanical braking torque setpoint (BRK_Tq_sp_raw(t)) is an unsaturated raw setpoint.

8. Method for compensating for torque breakage according to one of the preceding claims, **characterised in that** the torque setpoint (BRK_Tq_sp(t)) is linked to the unsaturated mechanical braking torque setpoint BRK_Tq_sp_raw(t) by the following relationships:

- if

$$(BRK\_Tq\_sp\_raw(t)) > 0, (BRK\_Tq\_sp(t)) = 0,$$

and
- if

$$(BRK\_Tq\_sp\_raw(t)) <= 0, BRK\_Tq\_sp(t) = BRK\_Tq\_sp\_raw(t).$$

**Fig. 1**

**Fig. 2**

**EP 3 548 323 B1**

## RÉFÉRENCES CITÉES DANS LA DESCRIPTION

**Documents brevets cités dans la description**

- FR 2973299
- WO 2009080901 A1
- US 6126251 A